# EUROPÄISCHE PATENTANMELDUNG

(11) **EP 3 974 610 A1**
(43) Veröffentlichungstag der Anmeldung: **30.03.2022**
(21) Anmeldenummer: 21196269.1
(22) Anmeldetag: 13.09.2021
(51) Int. Cl.: E05F 15/643, H02K 7/08, H02K 7/10, H02K 21/24

(54) **ANTRIEBSEINRICHTUNG ZUM VERSCHIEBEN EINES FLÜGELS**

(30) Priorität: 25.09.2020 DE 102020125121
(71) Anmelder: dormakaba Deutschland GmbH, 58256 Ennepetal (DE)
(72) Erfinder: Vom Brocke, Jan Eric, 58256 Ennepetal (DE); Busch, Sven, 58256 Ennepetal (DE); Wagner, Martin, 58256 Ennepetal (DE); Kalthoff, Sebastian, 58256 Ennepetal (DE)
(74) Vertreter: Balder IP Law, S.L.

(57) **Zusammenfassung**

Die Erfindung betrifft eine Antriebseinrichtung (1) zum Verschieben eines Flügels (2), insbesondere eines Türflügels oder eines Fensterflügels, mit einer elektrischen Maschine (6), wobei die elektrische Maschine (6) einen, insbesondere einzigen, Stator (36) und einen, insbesondere einzigen, um eine Maschinenachse (X1) drehbaren Rotor (37) aufweist, mit zumindest einem Übersetzungselement (3) zur Übersetzung einer Drehbewegung des Rotors (37) in eine lineare Bewegung. Die elektrische Maschine (6) ist als Axialflussmaschine ausgebildet.

## Beschreibung

Die Erfindung betrifft eine Antriebseinrichtung zum Verschieben eines Flügels, insbesondere eines Türflügels oder eines Fensterflügels, mit den Merkmalen des Oberbegriffs des Anspruchs 1.

Antriebseinrichtungen können zum Verschieben eines Flügels Anwendung finden, wobei unter einem Flügel insbesondere ein Tür- oder Fensterflügel verstanden wird. Als Türflügel wird der bewegbare Teil einer Tür bezeichnet, für den auch die Bezeichnung Türblatt geläufig ist.

Derartige Antriebseinrichtungen zum Verschieben eines Flügels sind bekannt.

Aufgabe der Erfindung ist es eine Antriebeinrichtung anzugeben, welche möglichst wenig Bauraum benötigt, bevorzugt wobei ein flexibler Einsatz der Antriebeinrichtung, insbesondere in Bezug auf unterschiedliche Flügelbreiten und/oder unterschiedliche Flügelanzahl, ermöglicht werden soll.

Die Aufgabe wird durch eine Antriebseinrichtung mit den Merkmalen des Anspruchs 1 gelöst. Die Aufgabe wird aber auch durch ein Verfahren mit den Merkmalen des Anspruchs 13 gelöst. Vorteilhafte Weiterbildungen der Antriebseinrichtung sind in den abhängigen Ansprüchen, der Beschreibung und in den Figuren angegeben. Merkmale und Details, die in Zusammenhang mit der erfindungsgemäßen Antriebseinrichtung beschrieben sind, gelten dabei auch in Zusammenhang mit dem erfindungsgemäßen Verfahren und/oder der erfindungsgemäßen Verwendung und umgekehrt. Dabei können die in der Beschreibung und in den Ansprüchen erwähnten Merkmale jeweils einzeln für sich oder in Kombination erfindungswesentlich sein. Die Beschreibung charakterisiert und spezifiziert die Erfindung insbesondere im Zusammenhang mit den Figuren zusätzlich.

Besonders bevorzugt wird eine Antriebseinrichtung zum Verschieben eines Flügels, insbesondere eines Türflügels oder eines Fensterflügels, mit einer elektrischen Maschine angegeben. Die elektrische Maschine weist einen, insbesondere einzigen, Stator und einen, insbesondere einzigen, um eine Maschinenachse drehbaren Rotor auf, mit zumindest einem Übersetzungselement zur Übersetzung einer Drehbewegung des Rotors in eine lineare Bewegung. Die elektrische Maschine ist als Axialflussmaschine ausgebildet.

Diese Ausgestaltung ist vorteilhaft hinsichtlich einer kompakten Bauweise bei gleichzeitig hoher Leistung. Zudem ist diese Ausgestaltung vorteilhaft hinsichtlich der erreichbaren Bauraumeinsparung.

Mit der Maschinenachse ist die Drehachse gemeint, um welche sich der Rotor der elektrischen Maschine dreht, wobei die Maschinenachse in ihrer Erstreckung grundsätzlich nicht begrenzt ist.

Eine axiale Erstreckung beschreibt eine Erstreckung parallel zu der Maschinenachse.

Die Axialflussmaschine kann als Motor und/oder Generator ausgebildet sein. Als Motor kann die Axialflussmaschine aus elektrischer Energie eine Drehbewegung, insbesondere ein Drehmoment, erzeugen. Als Generator kann die Axialflussmaschine aus einer Drehbewegung, insbesondere aus einem Drehmoment, elektrische Energie erzeugen.

Bei der Axialflussmaschine wird der magnetische Fluss hauptsächlich parallel zu der Maschinenachse der elektrischen Maschine gebildet. Die Axialflussmaschine weist eine im Vergleich zu anderen Maschinentypen geringe axiale Baulänge auf. Unter der axialen Baulänge wird eine Baulänge in einer zu der Maschinenachse parallelen Richtung verstanden. Die Verwendung einer Axialflussmaschine ermöglicht daher eine Reduktion der Abmessungen der elektrischen Maschine in axialer Richtung. Hierdurch kann eine kompakte Ausgestaltung des Motor-Getriebe-Moduls ermöglicht werden. Insbesondere kann es sich bei der Axialflussmaschine um eine bürstenlose Gleichstrommaschine, insbesondere eine sogenannte BLDC-Maschine, handeln. Eine derartige Maschine ist wie eine Drehstrom-Synchronmaschine mit Erregung durch Permanentmagnete aufgebaut.

Insbesondere kann das Übersetzungselement als Riemen, insbesondere Zahnriemen, oder Seil oder Kette ausgebildet sein.

Bevorzugt kann sein, dass die Maschinenachse orthogonal zu einer von dem Flügel gebildeten virtuellen Ebene verläuft.

Gemeint ist dabei die Ebene, welche von einer plattenförmigen Fläche des Flügels gebildet wird. Die virtuelle Ebene wird im Lichte der Erfindung als unendlich betrachtet und geht daher über die Fläche des Flügels hinaus.

Ein weiterer Vorteil der Axialflussmaschine ist darin zu sehen, dass diese in axialer Richtung, also entlang der Maschinenachse gesehen, wenig Bauraum benötigt, sodass die Antriebseinrichtung als Ganzes kompakt in axialer Richtung ausführbar ist.

Bevorzugt kann sein, dass die Antriebseinrichtung ein mit dem Rotor wirkverbundenes, insbesondere drehfestes, Triebelement aufweist. Weiter bevorzugt kann sein, dass der Rotor und das Triebelement formschlüssig und/oder kraftschlüssig und/oder stoffschlüssig verbunden sind, insbesondere einstückig ausgebildet sind.

Bevorzugt kann sein, dass das Triebelement eine Außenverzahnung aufweist, bevorzugt, dass es sich bei der Außenverzahnung um eine gerade oder eine schräge oder eine V-förmige Außenverzahnung handelt.

Alternativ kann die Außenverzahnung V-förmig ausgebildet sein. Eine V-förmige Verzahnung ermöglicht eine hohe Laufruhe und somit eine Geräuschminderung. Ferner kann ein Übersetzungselement mit korrespondierender V-förmigen Verzahnung dadurch auf dem Triebelement gesichert werden. Dadurch kann eine zusätzliche Sicherung des Übersetzungselements auf dem Triebelement entfallen. Das Übersetzungselement kann dabei geeignete Zahnprofile wie zum Beispiel ein Trapezprofil, Kreisprofil, Evolventenprofil und/oder Parabolprofil aufweisen.

Bevorzugt kann sein, dass das, insbesondere als Zahnriemen ausgebildete, Übersetzungselement eine zu der Außenverzahnung des Triebelements korrespondierende Verzahnung aufweist und um das Triebelement, insbesondere gespannt, derart angeordnet ist, dass die Verzahnung des Übersetzungselements und die Außenverzahnung des Triebelements in Eingriff stehen.

Anders ausgedrückt umschlingt das Übersetzungselement teilweise das Triebelement, wobei die Verzahnung des Übersetzungselements und die Außenverzahnung des Triebelements ineinandergreifen. Auf diese Weise wird eine schlupffreie Übersetzung, insbesondere mit einem Übersetzungsverhältnis nahe 1, der Drehbewegung des Triebelements in die lineare Bewegung des Übersetzungselements ermöglicht.

Bevorzugt kann sein, dass das Triebelement zumindest eine in radialer Richtung des Rotors abstehende, insbesondere kreisförmige, Bordscheibe zur Sicherung des Übersetzungselements an dem Triebelement aufweist.

Insbesondere kann die Bordschreibe formschlüssig und/oder kraftschlüssig und/oder stoffschlüssig verbunden, bevorzugt einstückig mit dem Triebelement ausgebildet sein.

Insbesondere kann das Triebelement jeweils eine Bordscheibe an seinen Enden der axialen Erstreckung aufweisen. Insbesondere kann eine Bordscheibe von einer Rotorplatte des Rotors ausgebildet werden. Hierzu kann die Rotorplatte eine Phase aufweisen.

Insbesondere kann die Antriebseinrichtung eine von dem Rotor in radialer Richtung beabstandete um eine Drehachse drehbare Umlenkrolle umfassen, wobei das Übersetzungselement um die Umlenkrolle gespannt angeordnet ist. Insbesondere können die Drehachse der Umlenkrolle und die Maschinenachse parallel zueinander verlaufen.

Dabei kann das Übersetzungselement um das Triebelement einerseits und um die Umlenkrolle andererseits gespannt angeordnet sein.

Insbesondere kann die Antriebseinrichtung eine Montageplatte aufweisen, an der die elektrische Maschine, insbesondere der Stator, und/oder die Umlenkrolle angeordnet sind. Die Montageplatte kann als Teil eines Gehäuses ausgeführt sein. Die Montageplatte kann eine oder mehrere vorgefertigte Aufnahmestellen zur formschlüssigen und/oder kraftschlüssigen und/oder stoffschlüssigen Verbindung mit der elektrischen Maschine und/oder der Umlenkrolle aufweisen.

Insbesondere kann die Umlenkrolle von einer Spannvorrichtung vorgespannt sein. Die Spannvorrichtung kann dabei zumindest eine Zugfeder und/oder Druckfeder aufweisen. Auf diese Weise wird die Umlenkrolle gegenüber dem Triebelement, insbesondere in entgegengesetzte Richtung zu dem Triebelement, vorgespannt, sodass das an dem Triebelement und an der Umlenkrolle angeordnete Übersetzungselement, insbesondere unter bestimmter Spannung, gespannt wird. Dies verbessert das Laufverhalten des Übersetzungselements. Ferner erleichtert dies eine sachgerechte Montage des Übersetzungselements. Dabei kann die Spannvorrichtung die Umlenkrolle während der Montage des Übersetzungselementes spannen, wonach die Umlenkrolle fixiert wird. Alternativ kann die Spannvorrichtung die Umlenkrolle während und nach der Montage vorspannen. Dabei kann die Umlenkrolle in einer Führung der Montageplatte verschiebbar gelagert sein.

Insbesondere kann die Antriebseinrichtung zumindest einen Laufwagen zur Verbindung mit dem Flügel umfassen, wobei der Laufwagen formschlüssig und/oder kraftschlüssig und/oder stoffschlüssig mit dem Übersetzungselement verbunden ist.

Insbesondere können mehrere Laufwagen vorgesehen sein, wobei ein oder mehrere Laufwagen jeweils mit einem Flügel verbunden werden können. Insbesondere kann der Laufwagen oder zumindest ein, insbesondere jedes Rad, des Laufwagens eine reibungsmindernde und/oder geräuschmindernde Beschichtung aufweisen.

Insbesondere kann die Antriebseinrichtung eine Laufschiene und zumindest einen in der Laufschiene beweglichen Laufwagen zur Verbindung mit dem Flügel umfassen, wobei der Laufwagen formschlüssig und/oder kraftschlüssig und/oder stoffschlüssig mit dem Übersetzungselement verbunden ist.

Insbesondere kann die Laufschiene, insbesondere an ihrer Kontaktfläche zu dem Laufwagen, eine reibungsmindernde und/oder geräuschmindernde Beschichtung aufweisen.

Bevorzugt kann sein, dass der Stator einen, insbesondere plattenförmigen, Statorsockel, und mehreren von einer gemeinsamen Oberfläche des Statorsockels in axialer Richtung der Axialflussmaschine abstehende Statorzähne aufweist. Weiter bevorzugt kann sein, dass der Statorsockel eine Lageraufnahme zur Aufnahme eines Wälzlagers oder eines Gleitlagers aufweist. Weiter bevorzugt kann sein, dass der Stator einen feststehenden Bolzen aufweist, wobei der Bolzen formschlüssig und/oder kraftschlüssig und/oder stoffschlüssig mit dem Stator verbunden oder einstückig ausgebildet ist und die Lageraufnahme umfasst. Dabei kann der Bolzen ebenfalls einen Lager-Durchbruch einer Platine durchgreifen.

Insbesondere kann die Lageraufnahme eine, insbesondere ringförmige, Lagerauflagefläche aufweisen, die formschlüssig und/oder kraftschlüssig und/oder stoffschlüssig mit dem Statorsockel verbunden ist oder einstückig mit dem Statorsockel ausgebildet ist.

Die Lagerauflagefläche bezeichnet eine Fläche, auf oder an welcher das Lager anliegen kann.

Insbesondere kann die Lageraufnahme zylindrisch, insbesondere hohlzylindrisch, ausgebildet sein.

Insbesondere kann in oder an der Lageraufnahme ein Wälzlager oder ein Gleitlager aufgenommen sein. Dabei kann das Wälzlager oder das Gleitlager den Lager-Durchbruch einer Platine der Antriebseinrichtung durchgreifen. Insbesondere kann die Platine in einem Bauraum zwischen dem Statorsockel und dem Rotor angeordnet sein.

Diese Ausgestaltung ist vorteilhaft hinsichtlich einer weiteren Baumeinsparung in axialer Richtung.

Insbesondere kann die Lageraufnahme formschlüssig und/oder kraftschlüssig und/oder stoffschlüssig mit dem Statorsockel verbunden sein oder einstückig mit dem Statorsockel ausgebildet sein.

Insbesondere können die Statorzähne einstückig mit dem Statorsockel ausgebildet sein. Insbesondere kann der Statorsockel mit zumindest einem, insbesondere jedem, Statorzahn formschlüssig und/oder kraftschlüssig und/oder stoffschlüssig verbunden sein oder einstückig ausgebildet sein.

Insbesondere kann der Stator als Sinterkörper oder Gussteil ausgebildet sein. Insbesondere kann der Stator nach dem Sintern oder Gießen ferner gefräst werden.

Insbesondere kann der Stator aus einem pulverförmigen, insbesondere magnetisch optimierten, Material gebildet sein. Insbesondere kann dabei jedes Pulverkorn mit einer isolierenden Beschichtung versehen sein. Insbesondere kann der Stator aus einem die Wirbelströme unterdrückenden Material gefertigt sein, bevorzugt aus gepresstem Eisenpulver. Insbesondere können die einzelnen Eisenpulverkörner mit einer elektrisch isolierenden Beschichtung versehen sein. Insbesondere kann der Stator aus einem dünnen Blech gefertigt sein. Insbesondere kann das Blech dabei als Spirale aufgewickelt sein. Diese Ausgestaltungen sind für sich oder in geeigneter Kombination betrachtet vorteilhaft hinsichtlich zumindest der Reduktion von Wirbelströmen.

Insbesondere kann der Stator Nickel und/oder Kobalt aufweisen. Insbesondere kann der Stator aus magnetischem Eisen mit Nickelanteilen und/oder Kobaltanteilen ausgebildet sein.

Insbesondere kann der Stator eine oder mehrere Spulen aufweisen, die, insbesondere jeweils, mittelbar oder unmittelbar um die Statorzähne gewickelt sind.

Mit dem Begriff der Spule ist ein elektrischer Leiter mit zumindest einer Wicklung gemeint. Der elektrische Leiter kann dabei als, insbesondere mittels einer Beschichtung, bevorzugt mittels eines Isolierlacks, isolierter Draht und/oder isoliertes Band ausgeführt sein. Hierzu kann der Leiter eine Isolierbeschichtung, insbesondere einen Isolierlack, aufweisen. Insbesondere kann die Spule als vergossene Spule ausgebildet sein, wobei einzelne Wicklungen der Spule mittels eines Vergussmaterials voneinander elektrisch isoliert sind.

Insbesondere kann zumindest einer der Statorzähne, insbesondere jeder Statorzahn einen, insbesondere elektrisch isolierenden, Zahnmantel aufweisen, wobei der Stator mehrere Spulen aufweist und zumindest eine der Spulen, insbesondere jede Spule, um den Zahnmantel gewickelt ist. Insbesondere können mehrere Spulen um einen der Statorzähne und/oder um einen der Zahnmäntel gewickelt sein.

Insbesondere kann der Zahnmantel zumindest teilweise aus einem Kunststoff bestehen, besonders bevorzugt als Spritzgussbauteil ausgebildet sein.

Insbesondere kann zumindest eine der Spulen um einen Zahnmantel gewickelt sein, wobei der Zahnmantel den Statorzahn zumindest teilweise umgibt. Insbesondere kann der Zahnmantel an der Platine und/oder an dem Statorzahn und/oder an dem Statorsockel formschlüssig und/oder kraftschlüssig und/oder stoffschlüssig fixiert sein.

Insbesondere kann der Zahnmantel einen oder mehrere Vorsprünge aufweisen, welche in eine oder mehrere Ausnehmungen der Platine und/oder des Statorzahns und/oder des Statorsockels, insbesondere mittels zumindest einer Presspassverbindung, eingreifen. Insbesondere kann der Zahnmantel mit der Platine und/oder dem Statorzahn und/oder dem Statorsockel formschlüssig und/oder kraftschlüssig und/oder stoffschlüssig lösbar, bevorzugt mittels einer Clipsverbindung und/oder einer Schneidklemmverbindung oder unlösbar, bevorzugt mittels einer Ultraschallvernietung und/oder mittels einer thermischen Vernietung, verbunden sein.

Aus dieser Ausgestaltung ergibt sich eine Einheit aus Spulen und der Platine und/oder dem Statorsockel und/oder dem Statorzahn, welche einfach montierbar ist.

Bevorzugt kann sein, dass die Antriebseinrichtung das mit dem Rotor wirkverbundene, insbesondere drehfeste, Triebelement aufweist, wobei der Stator oder der mit dem Stator feststehende Bolzen eine weitere Lageraufnahme aufweist, wobei an der weiteren Lageraufnahme ein Radiallager zur drehbaren Lagerung des Triebelements angeordnet ist und das Triebelement an dem Radiallager gelagert ist.

Das Radiallager dient zur Aufnahme der auf das Triebelement wirkenden Radialkräfte. Insbesondere können mehrere Radiallager angeordnet sein. Bei dem Radiallager kann es sich um ein Nadellager oder Rillenkugellager handeln.

Bevorzugt kann sein, dass das Übersetzungselement, insbesondere die Wirkungslinie des Übersetzungselements, die axiale Erstreckung des Radiallagers zumindest teilweise umgibt Dabei kann die Wirkungslinie die axiale Erstreckung des Radiallagers in der Mitte und/oder vollständig umgeben. Insbesondere bei der Anordnung von zwei Radiallagern bezüglich der Maschinenachse hintereinander, kann die Wirkungslinie des Übersetzungselementes zwischen den beiden Radiallagern oder zwischen der Kontaktfläche der beiden Radiallager verlaufen.

Die Wirkungslinie des Übersetzungselements beschreibt dabei die Mitte der Erstreckung des Übersetzungselements parallel zur Maschinenachse.

Bevorzugt kann sein, dass der Stator eine oder mehrere Spulen und der Rotor einen oder mehrere Permanentmagneten aufweist. Weiter bevorzugt kann sein, dass das Verhältnis zwischen der Anzahl der Permanentmagnete als Dividend und der Anzahl der Spulen in einem Bereich von 1,0 bis 1,6, bevorzugt in einem Bereich von 1,2 bis 1,4 liegt, besonders bevorzugt 4/3 ist, insbesondere 1,1 ist, insbesondere 7/6 ist.

Insbesondere kann der Stator 7 bis 16, besonders bevorzugt 10 bis 14 Spulen aufweisen, wobei die Spule oder die Spulen des Stators derart angeordnet sind, dass durch die Spule oder die Spulen ein magnetischer Fluss in einer Richtung parallel zu der Maschinenachse erzeugbar ist.

Insbesondere kann die elektrische Maschine, insbesondere als Motor, ein Verhältnis aus dem maximalen Drehmoment zu der axialen Erstreckung der Maschine aufweisen, das größer ist als 30 Nm/m, bevorzugt größer ist als 100 Nm/m, besonders bevorzugt größer ist als 200 Nm/m. Die axiale Erstreckung ist parallel zur Maschinenachse. Insbesondere kann dieses Verhältnis größer als 50 Nm/m, bevorzugt größer als 70 Nm/m, besonders bevorzugt größer als 150 Nm/m, sein. Insbesondere kann die elektrische Maschine eine Drehmomentdichte, also Drehmoment zu Motorvolumen, von größer oder gleich 6000 Nm/m^3, bevorzugt von größer oder gleich 15000 Nm/m^3 und besonders bevorzugt von größer oder gleich 20000 Nm/m^3 und/oder eine Drehmomentkonstante von größer oder gleich 0,1 Nm/A, bevorzugt von größer oder gleich 0,2 Nm/A und besonders bevorzugt von größer oder gleich 0,3 Nm/A aufweisen. Diese Ausgestaltung ermöglicht einen kompakten Aufbau eines Getriebes und kleine Übersetzungsverhältnisse, wobei dennoch ein zuverlässiges Schließen der Tür ermöglicht wird. Dabei kann die Antriebseinrichtung ferner insgesamt kompakt bauen.

Insbesondere kann die elektrische Maschine in der Ausgestaltung als Axialflussmaschine ein Verhältnis zwischen der Erstreckung zumindest eines Statorzahns in axialer Richtung der elektrischen Maschine als Dividend und der Erstreckung des Statorsockels in axialer Richtung der elektrischen Maschine aufweisen, wobei das Verhältnis größer oder gleich 2, insbesondere größer oder gleich 3, insbesondere größer oder gleich 4, insbesondere größer oder gleich 5, insbesondere größer oder gleich 6 sein.

Insbesondere kann der Rotor eine Anzahl an Permanentmagneten aufweisen, die ein Vielfaches von 2 ist.

Insbesondere kann der Rotor zumindest einen Permanentmagnet umfassen, wobei der Permanentmagnet entlang eines virtuellen Kreises um die Maschinenachse angeordnet ist und einen ersten Winkelbereich aufspannt. Weiter bevorzugt kann sein, dass der Stator einen Statorsockel mit zumindest einem von dem Statorsockel, insbesondere in axialer Richtung der Axialflussmaschine, abstehenden Statorzahn umfasst, wobei der Statorzahn entlang eines virtuellen Kreises um die Maschinenachse angeordnet ist und einen zweiten Winkelbereich aufspannt, wobei das Verhältnis des ersten Winkelbereichs als Dividend zu dem zweiten Winkelbereich im Bereich von 1,1 bis 1,6, bevorzugt im Bereich von 1,2 bis 1,5, besonders bevorzugt im Bereich von 1,3 bis 1,4, liegt. Bei mehreren Statorzähnen und/oder Permanentmagneten kann jeder Statorzahn zu jedem Permanentmagnet das oben genannte Verhältnis aufweisen. Der Statorzahn und der Permanentmagnet spannen dabei den jeweiligen Winkelbereich auf, indem sie entlang des jeweiligen virtuellen Kreises um die Maschinenachse angeordnet sind und sich über einen Teil der 360° des virtuellen Kreises erstrecken.

Alternativ oder kumulativ kann bei mehreren Permanentmagneten und/oder Statorzähnen das Verhältnis des ersten summierten Winkelbereichs als Dividend zu dem zweiten summierten Winkelbereich in einem Bereich von 1,3 bis 1,9 oder sogar von 1,5 bis 1,8 liegen, wobei der erste summierte Winkelbereich aus der Summe der ersten Winkelbereiche der einzelnen Permanentmagneten und der zweite summierte Winkelbereich aus der Summer der zweiten Winkelbereichen der einzelnen Statorzähne gebildet wird.

Der Begriff Kreis um die Maschinenachse bedeutet, dass die Maschinenachse den Mittelpunkt des Kreises bildet.

Insbesondere kann eine parallel zum Statorsockel verlaufende Fläche des Statorzahns, insbesondere jeden Statorzahns, derart ausgeführt sein, dass sich die Fläche in radialer Richtung des Stators ausgehend von der Maschinenachse erweitert. Alternativ oder kumulativ kann eine parallel zum Statorsockel verlaufende Fläche des Permanentmagnets, insbesondere jedes Permanentmagnets, derart ausgeführt sein, dass sich die Fläche in radialer Richtung des Rotors ausgehend von der Maschinenachse erweitert. Auf diese Weise können das angegebene Verhältnis des ersten Winkelbereichs als Dividend zu dem zweiten Winkelbereich entlang des radialen Verlaufes des Stators konstant gehalten werden. Insbesondere kann die parallel zum Statorsockel verlaufende Fläche des Statorzahns, insbesondere jeden Statorzahns, entlang des axialen Verlaufes des Statorzahns konstant bleiben.

Insbesondere kann zumindest ein, insbesondere jeder, Permanentmagnet plattenförmig ausgebildet sein. Insbesondere kann der Rotor eine Rotorplatte, insbesondere Rotorscheibe aufweisen. Ferner kann zumindest ein, insbesondere jeder, Permanentmagnet von der Rotorplatte des Rotors in axialer Richtung der Maschine, insbesondere in Richtung zu dem Stator, abstehen. Insbesondere kann die Rotorplatte eine oder mehrere Vertiefungen, insbesondere eine der Anzahl der Permanentmagneten entsprechende Anzahl an Vertiefungen, aufweisen, wobei in jeweils einer Vertiefung ein Permanentmagnet einliegt. Insbesondere kann dabei die Form der Vertiefung, insbesondere jeder Vertiefung, der Form des einliegenden Permanentmagneten entsprechen. Dies dient zur Sicherung der Permanentmagnete auf dem Rotor, insbesondere auf der Rotorplatte.

Insbesondere kann dabei das Verhältnis zwischen dem Umfang der Rotorplatte als Dividend und dem Umfang des Triebelements größer oder gleich 2, insbesondere größer oder gleich 3 sein. Ein kleiner Umfang des Triebelements ermöglicht eine große Beschleunigung, sodass innerhalb kurzer Zeit die maximale Geschwindigkeit des Übersetzungselements und damit des Flügels erreicht werden kann.

Insbesondere kann die elektrische Maschine einen einzigen Stator und zwei Rotoren aufweisen. Insbesondere können dabei die zwei Rotoren einander gegenüberliegend, insbesondere mit dem Stator als Zwischenteil, angeordnet sein. Insbesondere kann die elektrische Maschine einen einzigen Rotor und zwei Statoren aufweisen. Insbesondere können dabei die zwei Statoren einander gegenüberliegend, insbesondere mit dem Rotor als Zwischenteil, angeordnet sein.

Bevorzugt kann sein, dass der Stator eine oder mehrere Spulen und einen, insbesondere plattenförmigen, Statorsockel aufweist, wobei in einem Bauraum zwischen dem Statorsockel und dem Rotor die Platine angeordnet ist, wobei zumindest eine, insbesondere jede, der Spulen, mit der Platine elektrisch verbunden ist, bevorzugt, dass die Platine parallel zu dem Statorsockel angeordnet ist.

Eine Platine ist im Sinne der Erfindung ein plattenförmiges, insbesondere bestücktes, Element zur Leitung von elektrischer Energie. Die Platine kann als Leiterkarte ausgebildet sein. Die Begriffe werden im Folgenden synonym verwendet. Die Platine kann mehrere Schichten umfassen und/oder Kunststoff aufweisen und/oder flexibel ausgeführt sein. Insbesondere kann die Platine als massive Aluminiumleiterkarte ausgeführt sein. Diese Ausgestaltung ist hinsichtlich guter Wärmeleitungseigenschaften vorteilhaft.

Insbesondere kann der Stator den, insbesondere plattenförmigen, Statorsockel und mehrere von dem Statorsockel in axialer Richtung der Axialflussmaschine abstehende Statorzähne aufweisen, wobei die Platine in einer ersten, insbesondere zu dem Statorsockel parallelen, Ebene angeordnet ist, wobei die erste Ebene in einem Zwischenraum zwischen den Statorzähnen und dem Rotor liegt. Insbesondere kann die Platine auf den Statorzähnen aufliegen.

Insbesondere kann die Platine in einem Luftspalt zwischen Stator und Rotor angeordnet sein. Mit dieser Ausgestaltung hat die Platine vorteilhaft noch eine Zusatzfunktion und kann als Abstandshalter zwischen Stator und Rotor agieren. Diese Ausgestaltung ist vorteilhaft hinsichtlich einer weiteren Baumeinsparung in axialer Richtung.

Insbesondere können die Statorzähne dabei von einer gemeinsamen Oberfläche des Statorsockels abstehen. Insbesondere kann der Statorsockel mit zumindest einem, insbesondere jedem, Statorzahn formschlüssig und/oder kraftschlüssig und/oder stoffschlüssig verbunden sein oder einstückig ausgebildet sein. Insbesondere kann der Stator den Statorsockel umfassen, der einen, insbesondere plattenförmigen, Sockelabschnitt und mehrere von einer gemeinsamen Oberfläche des Sockelabschnitts, insbesondere in axialer Richtung der Axialflussmaschine, abstehende Statorzähne aufweist. Insbesondere kann um zumindest einen, insbesondere jeden, Statorzahn, zumindest eine Spule mittelbar oder unmittelbar gewickelt sein.

Alternativ kann der Stator mehrere von dem Statorsockel in axialer Richtung der Axialflussmaschine abstehende Statorzähne aufweisen, wobei die Platine in einer zweiten, insbesondere zu dem Statorsockel parallelen, Ebene angeordnet ist, wobei die zweite Ebene von zumindest einem, insbesondere jedem Statorzahn, des Stators durchbrochen wird.

Diese Ausgestaltung ist vorteilhaft hinsichtlich einer weiteren Baumeinsparung in axialer Richtung.

Insbesondere kann die Platine einen oder mehrere Durchbrüche, insbesondere der Anzahl der Statorzähne entsprechende Anzahl von Durchbrüchen, aufweisen, welche von den Statorzähnen durchgriffen werden.

Insbesondere kann die Form der jeweiligen Durchbrüche der Fläche der jeweiligen Zähne parallel zur Platine entsprechen.

Insbesondere kann die Platine einen einzelnen Durchbruch für mehrere oder alle Zähne umfassen.

Insbesondere zumindest eine, insbesondere jede, Spule in oder auf der Platine integriert, insbesondere in dem Material der Platine, angeordnet sein.

Insbesondere kann der Zahnmantel eine integrierte elektrische Leitung aufweisen, wobei die Leitung mit der Spule elektrisch verbunden ist. Insbesondere kann die Leitung, insbesondere mittels am Zahnmantel angeordneten Kontaktstiften, mit der Platine elektrisch verbunden sein.

Insbesondere kann die Platine zumindest einen Sensor, insbesondere einen Hallsensor und/oder eine Inertialsensor, zur Ermittlung der Rotorstellung und/oder zur Ermittlung der Stellung der Antriebseinrichtung aufweisen.

Insbesondere kann der Inertialsensor zur Erfassung der sechs möglichen kinematischen Freiheitsgrade über drei jeweils aufeinander orthogonal stehende Beschleunigungssensoren für die Erfassung der translatorischen Bewegung und/oder drei orthogonal zueinander angebrachte gyroskopische Sensoren für die Erfassung rotierender Bewegungen aufweisen.

Insbesondere kann die Antriebseinrichtung eine Steuerungseinrichtung zur Steuerung der Axialflussmaschine, insbesondere der durch die Spulen geleiteten Ströme, aufweisen. Insbesondere kann zumindest ein Element der Steuerungseinrichtung auf der Platine angeordnet sein.

Insbesondere kann die gesamte Steuerungseinrichtung auf der Platine angeordnet sein.

Insbesondere kann die Platine eine Erstreckung in axialer Richtung der Axialflussmaschine kleiner oder gleich 1,6 mm, bevorzugt kleiner oder gleich 1 mm, besonders bevorzugt kleiner oder gleich 0,6 mm, aufweisen.

Insbesondere kann die Platine als Folienleiterkarte ausgebildet sein.

Insbesondere kann die Folienleiterkarte dabei eine Erstreckung in axialer Richtung der Axialflussmaschine kleiner oder gleich 0,3 mm, bevorzugt kleiner oder gleich 0,2 mm, besonders bevorzugt kleiner oder gleich 0,1 mm, aufweisen.

Insbesondere kann die Platine mehrschichtig ausgebildet sein, wobei die Platine zumindest eine Metallschicht, bevorzugt umfassend Kupfer und/oder Aluminium, und/oder zumindest eine Kunststoffschicht, insbesondere umfassend faserverstärkten Kunststoff, aufweist.

Insbesondere kann die Platine eine massive Metallschicht aufweisen. Diese Ausgestaltung ist vorteilhaft hinsichtlich der erreichbaren Wärmeableitung aus den Spulen.

Bevorzugt kann sein, dass die Spulen in mehrere Leitungspfade, insbesondere in zwei oder drei Leitungspfade, unterteilt sind, sodass zumindest einer der Leitungspfade unabhängig von zumindest einem weiteren Leitungspfad bestrombar ist. Weiter bevorzugt kann sein, dass zumindest einer, insbesondere zwei, der Leitungspfade auf einer ersten Stirnfläche der Platine angeordnet und/oder elektrisch kontaktiert ist. Weiter bevorzugt kann sein, dass auf einer der ersten Stirnfläche gegenüberliegenden zweiten Stirnfläche der Platine ebenfalls zumindest einer der Leitungspfade angeordnet und/oder elektrisch kontaktiert ist.

Auf diese Weise ist die Maschine mehrphasig, insbesondere 2phasig, insbesondere 3phasig ansteuerbar. Bei Ausfall eines der Leitungspfade kann die Maschine immer noch ein Drehmoment erzeugen. Insbesondere können mittels eines Leitungspfades mehrere Spulen bestromt werden. Insbesondere kann von jedem einzelnen Leitungspfad dieselbe Anzahl an Spulen bestrombar sein. Insbesondere kann ein einzelner Leitungspfad von einem einzelnen elektrischen Leiter gebildet werden, wobei der Leiter mehrere Spulen bildet

Auf diese Weise wird der Platz auf der Platine optimal ausgenutzt, insbesondere in der Weise, dass die einzelnen Leitungspfade mehr Platz auf der Platine zur Ableitung von Wärme bekommen und so eine Überhitzung verhindert werden kann.

Insbesondere kann die Antriebseinrichtung ein Steuerungsmodul mit einer Steuerungseinrichtung aufweisen. Insbesondere kann das Steuerungsmodul zumindest teilweise, insbesondere vollständig, innerhalb eines übergeordneten Gehäuses der Antriebseinrichtung angeordnet sein.

Insbesondere kann das Steuerungsmodul ein Steuerungsgehäuse umfassen. Insbesondere kann die Steuerungseinrichtung vollständig innerhalb des Steuerungsgehäuses angeordnet sein. Insbesondere kann das Steuerungsgehäuse mit dem übergeordneten Gehäuse und/oder mit einem Antriebsgehäuse kraftschlüssig und/oder formschlüssig und/oder stoffschlüssig verbunden sein. Insbesondere kann eine oder mehrere derartige Verbindungen in Form zumindest einer Verschraubung und/oder einer Verstiftung und/oder einer Presspassung und/oder einer T-Nut und/oder einer Schnappverbindung ausgeführt sein.

Insbesondere kann das Antriebsgehäuse eine oder mehrere vorgefertigte Aufnahmestellen zur formschlüssigen und/oder kraftschlüssigen und/oder stoffschlüssigen Verbindung mit der elektrischen Maschine und/oder einem Getriebe und/oder einer Abtriebswelle aufweisen.

Diese Ausgestaltung ist vorteilhaft hinsichtlich einer einfachen und montagefreundlichen Bauweise.

Insbesondere kann die Antriebseinrichtung ein Getriebe aufweisen, welches die Drehbewegung des Rotors in eine Bewegung des Triebelementes umwandelt.

Insbesondere kann das Getriebe als Zahnradgetriebe, bevorzugt als Stirnradgetriebe und/oder Planetengetriebe oder als Exzentergetriebe ausgebildet ist. Dabei kann eine Abtriebswelle des Getriebes das Triebelement bilden.

Als Planetengetriebe kann das Getriebe ein mit dem Rotor drehfestes, insbesondere einstückiges, Sonnenrad, mehrere um das Sonnenrad an einem Planetenträger befestigte Planetenräder und ein mit den Planeten in Eingriff stehendes Hohlrad aufweisen. Dabei kann das Hohlrad drehbar gelagert sein und den Leistungsausgang des Planetengetriebes bilden, wobei der Planetenträger feststehend ausgeführt ist. Alternativ kann der Planetenträger drehbar gelagert sein und den Leistungsausgang des Planetengetriebes bilden, wobei das Hohlrad feststehend ausgeführt ist. Die Begriffe Planet und Planetenrad werden synonym verwendet.

Als Planetengetriebe kann das Getriebe ferner zumindest eine Wolfromstufe aufweisen. In einer bevorzugten Ausführungsform einer derartigen Wolfromstufe weist, das Planetengetriebe eine erste Getriebestufe und eine zweite Getriebestufe auf, wobei die erste Getriebestufe ein Sonnenrad, mehrere erste an einem Planetenträger befestigten, von dem Sonnenrad angetriebenen Planeten und ein erstes feststehendes Hohlrad umfasst und die zweite Getriebestufe ein zweites drehbares Hohlrad, zweite mit den ersten Planeten drehfeste, insbesondere einstückige Planeten umfasst, wobei die zweiten Planeten das zweite Hohlrad antreiben. Insbesondere kann das zweite Hohlrad dabei den Leistungsausgang des Planetengetriebes bilden.

Als Exzentergetriebe kann das Getriebe als Planeten-Exzentergetriebe und/oder Wellgetriebe ausgeführt sein.

In einem weiteren Aspekt kann ein Verfahren zum Verschieben eines Flügels, insbesondere eines Türflügels oder eines Fensterflügels, mittels einer Antriebskraft angegeben werden, wobei die Antriebskraft von einer Antriebseinrichtung erzeugt wird. Die Antriebseinrichtung ist mittels eines Bedienelements der Antriebseinrichtung und/oder mittels einer auf den Flügel manuell durch eine Person ausgeübten Kraft aktivierbar. Die Antriebskraft wird von einer Steuerungseinrichtung der Antriebseinrichtung gesteuert und/oder geregelt.

Dadurch wird die Antriebskraft dann erzeugt, wenn das Bedienelement betätigt wird und/oder wenn eine Person versucht, den Flügel manuell zu verschieben.

Bevorzugt kann sein, dass die Antriebseinrichtung während einer Verschiebung des Flügels deaktiviert wird, wenn
- das Bedienelement der Antriebseinrichtung nicht mehr betätigt wird und/oder
- eine der Antriebskraft entgegengerichtete Kraft mittels der Steuerungseinrichtung detektiert wird.

Die aktuelle Position des Flügels beschreibt dabei die Position des Flügels, in der die Deaktivierung der Antriebseinrichtung erfolgte.

Dadurch kann die Antriebskraft auf den Flügel erzeugt werden, solange das Bedienelement betätigt wird, und sodann deaktiviert werden, sobald das Bedienelement nicht mehr betätigt wird, sodass der Flügel in der gewünschten Position gestoppt wird und, insbesondere zumindest eine vorgegebene Zeit lang, darin verbleibt.

Alternativ oder kumulativ kann die Antriebseinrichtung während einer Verschiebung des Flügels deaktiviert werden, wenn eine der Antriebskraft entgegengerichtete Kraft mittels der Steuerungseinrichtung detektiert wird. Insbesondere kann die Detektion mittels eines Sensors, insbesondere Hall-Sensors, erfolgen. Dieser Sensor kann auf der Platine angeordnet sein und/oder die Position des Rotors überwachen. Auf diese Weise kann die Antriebskraft deaktiviert werden, sobald ein Hindernis auf der Laufbahn des Flügels auftaucht und/oder eine manuelle Kraft durch eine Person entgegen zur Antriebkraft ausgeübt wird, sodass der Flügel in der aktuellen Position gestoppt wird und, insbesondere zumindest eine vorgegebene Zeit lang, darin verbleibt.

Insbesondere kann die Antriebseinrichtung, bevorzugt die elektrische Maschine und/oder das Getriebe und/oder ein Energiespeicher, derart ausgelegt werden, dass mittels der Antriebseinrichtung, insbesondere mittels eines Maschinenmoments, eine Bewegung des Flügels ohne eine durch eine Person ausgeübte manuelle Kraft, insbesondere ohne ein durch eine Person ausgeübtes manuelles Moment, auf den Flügel, insbesondere vollautomatisiert, erfolgen kann. Dabei kann jedoch das Verschieben des Flügels durch die durch die Person ausgeübte manuelle Kraft, insbesondere das manuelle Moment, auf den Flügel beschleunigt erfolgen.

Mit dem Verschieben des Flügels ist hierbei eine Öffnungsbewegung und/oder eine Schließbewegung des Flügels gemeint.

Alternativ kann dabei die Antriebseinrichtung, bevorzugt die elektrische Maschine und/oder das Getriebe und/oder der Energiespeicher, als Hilfsantrieb derart ausgelegt werden, dass ein Verschieben des Flügels nur dann durchgeführt wird, wenn zumindest in einem Zeitpunkt des Verschiebens des Flügels, insbesondere an einem Anfang des Verschiebens, zusätzlich zu einer mittels der Antriebseinrichtung erzeugten Kraft, insbesondere eines Maschinenmoments, auf den Flügel eine durch eine Person ausgeübte manuelle Kraft, insbesondere ein durch eine Person ausgeübtes manuelles Moment, auf den Flügel ausgeübt wird.

In einem weiteren Aspekt kann eine Verwendung einer Antriebseinrichtung in einem Schieberflügelantrieb, insbesondere Schiebertürantrieb angegeben werden.

Weitere Einzelheiten und Vorteile der Erfindung sollen nachfolgend anhand der in den Figuren gezeigten Ausführungsbeispiele erläutert werden. Hierin zeigt:
- Fig. 1: ein Ausführungsbeispiel einer Antriebseinrichtung gemäß der Erfindung in einer schematischen Darstellung,
- Fig. 2: ein Antriebsmodul in einer Schnittdarstellung,
- Fig. 3: eine Axialflussmaschine in prinzipieller Darstellung im Schnitt,
- Fig. 4: einen Stator der Axialflussmaschine aus Figur 2 als Einzelheit,
- Fig. 5: eine Platine als Einzelheit in Aufsicht auf eine erste Stirnfläche, und
- Fig. 6: die Platine aus Fig. 5 in Aufsicht auf eine zur ersten Stirnfläche gegenüberliegenden Stirnfläche.

In den unterschiedlichen Figuren sind gleiche Teile stets mit denselben Bezugszeichen versehen, weswegen diese in der Regel auch nur einmal beschrieben werden.

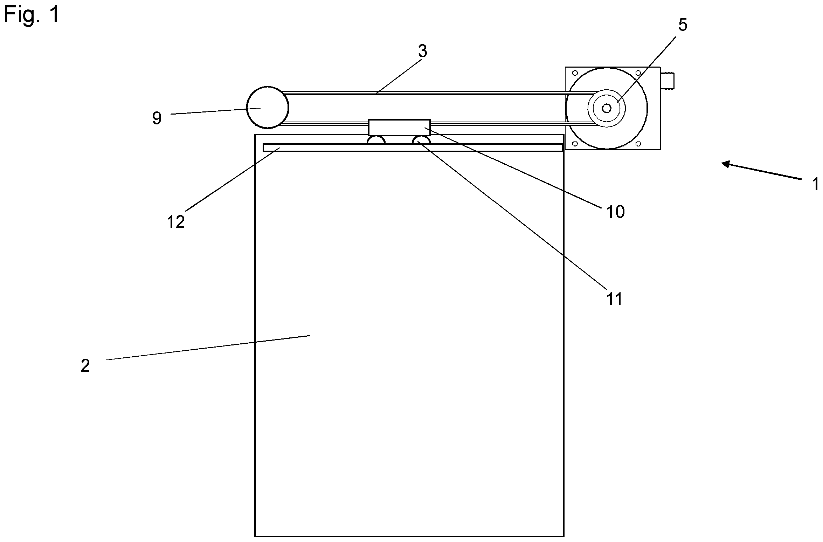

Figur 1 zeigt Antriebseinrichtung 1 zum Verschieben eines Flügels 2, mit einer elektrischen Maschine 6, wobei die elektrische Maschine 6 einen, insbesondere einzigen, Stator 36 und einen, insbesondere einzigen, um eine Maschinenachse X1 drehbaren Rotor 37 aufweist, mit zumindest einem Übersetzungselement 3 zur Übersetzung einer Drehbewegung des Rotors 37 in eine lineare Bewegung. Die elektrische Maschine 6 ist als Axialflussmaschine ausgebildet.

Die Maschinenachse X1 verläuft orthogonal zu einer von dem Flügel 2 gebildeten virtuellen Ebene, also in der Zeichnungsebene der Figur 1 senkrecht zu dieser in das Zeichnungsblatt hinein oder heraus.

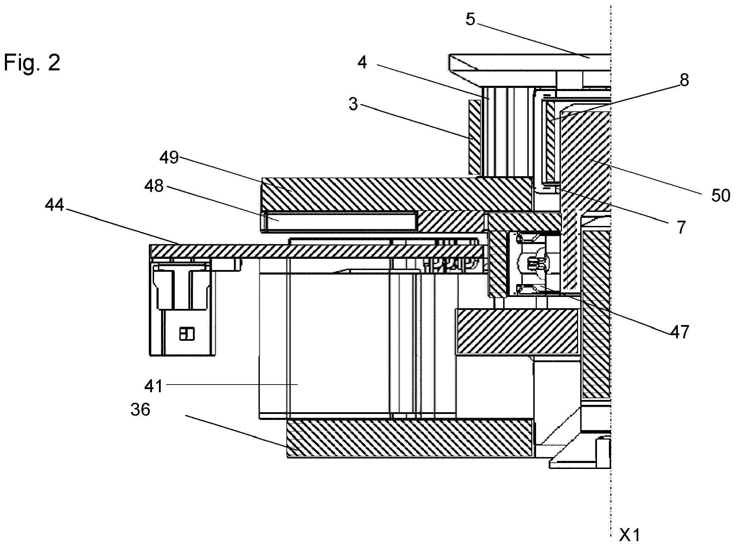

Die Antriebseinrichtung 1 weist ein mit dem Rotor 37 wirkverbundenes, drehfestes, Triebelement 4 auf (Figur 2). Das Triebelement 4 weist eine Außenverzahnung auf.

Das als Zahnriemen ausgebildete Übersetzungselement 3 weist eine zu der Außenverzahnung des Triebelements 4 korrespondierende Verzahnung auf. Das Übersetzungselement 3 ist um das Triebelement 4 gespannt, und derart angeordnet, dass die Verzahnung des Übersetzungselements 3 und die Außenverzahnung des Triebelements 4 in Eingriff stehen.

Das Triebelement 4 weist eine in radialer Richtung des Rotors 37 abstehende, kreisförmige Bordscheibe 5 zur Sicherung des Übersetzungselements 3 an dem Triebelement 4 auf. Die Bordscheibe 5 weist an der zum Übersetzungselement 3 angeordneten Seite eine Fase auf.

Ein mit dem Stator 37 feststehender Bolzen 50 weist eine Lageraufnahme 7 auf, wobei an der Lageraufnahme 7 ein Radiallager 8 zur drehbaren Lagerung des Triebelements 4 angeordnet ist. Das Triebelement 4 ist an dem Radiallager 8 gelagert.

Die Antriebseinrichtung 1 weist eine von dem Rotor 37 in radialer Richtung beabstandete um eine Drehachse drehbare Umlenkrolle 9 auf. Das Übersetzungselement 3 ist um die Umlenkrolle 9 gespannt angeordnet. Die Drehachse der Umlenkrolle 9 und die Maschinenachse X1 verlaufen parallel zueinander.

Die Antriebseinrichtung 1 weist einen Laufwagen 10 zur Verbindung mit dem Flügel 2 auf. Der Laufwagen 10 weist mehrere Räder 11 auf.

Die Antriebseinrichtung 1 weist ferner eine Laufschiene 12 und den in der Laufschiene 12 beweglichen Laufwagen 10 zur Verbindung mit dem Flügel 2 auf.

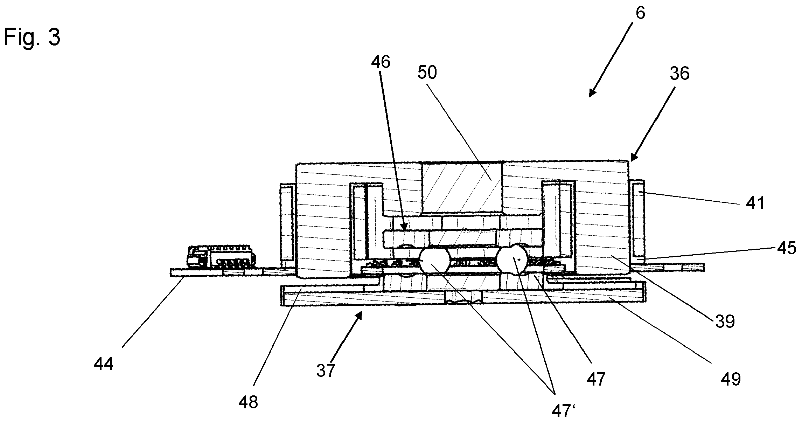

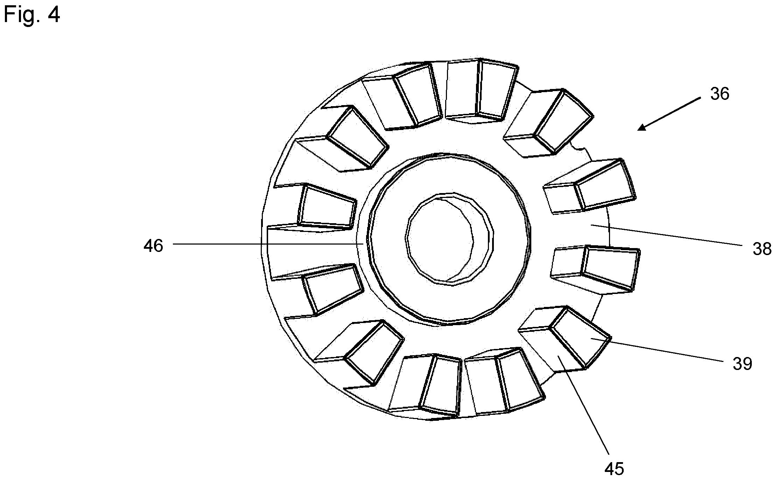

Die elektrische Maschine 6 ist als Einzelheit in Figur 3 prinzipiell dargestellt. Die elektrische Maschine 6 weist einen Stator 36 und einen Rotor 37 auf. Der Stator 36 ist zusätzlich in Figur 4 als Einzelheit dargestellt und weist einen plattenförmigen Statorsockel 38 und mehrere von dem Statorsockel 38 in axialer Richtung der elektrischen Maschine 6 abstehende Statorzähne 39 auf. Dabei ist um jeden der Statorzähne 39 jeweils eine Spule 41 angeordnet. Jeder Statorzahn weist einen elektrisch isolierenden Zahnmantel 45 auf, wobei der Stator 36 mehrere Spulen 41 aufweist und jede der Spulen 41 um den Zahnmantel 45 und daher mittelbar über den Zahnmantel um den Statorzahn 39 gewickelt ist. Die Statorzähne 39 durchgreifen dabei eine Platine 44, an welcher die Spulen 41 kontaktiert sind.

In Figur 3 ist erkennbar, dass der Stator 36 ferner einen feststehenden Bolzen 50 umfasst, wobei der Bolzen 50 eine Lageraufnahme 46 zur Aufnahme eines Wälzlagers 47 aufweist. Beispielhaft ist in Figur 3 ein Wälzlager 47 mit Kugeln 47' dargestellt. Die Antriebseinrichtung 1 umfasst das Wälzlager 47, zur drehbaren Lagerung des Rotors 37 gegenüber dem Stator 36, wobei das Wälzlager 47 an der Lageraufnahme 46 des Bolzens 50 aufgenommen ist. In einer nicht dargestellten Ausführungsform, kann eine Lageraufahme direkt am Statorsockel vorgesehen sein, an welcher ein Wälzlager aufgenommen sein kann. Der Rotor 37 ist mittels des Wälzlagers 47 an dem Stator 36 drehbar gelagert.

Der Rotor 37 umfasst mehrere Permanentmagnete 48. Jeder Permanentmagnet 48 ist plattenförmig ausgebildet. Der Rotor 37 weist eine Rotorplatte 49 in Form einer Rotorscheibe auf. Ferner steht jeder Permanentmagnet 48 von der Rotorplatte 49 des Rotors 37 in axialer Richtung der elektrischen Maschine, insbesondere in Richtung zu dem Stator 36, ab.

In den Figuren 2 sowie 3 ist zudem noch eine Platine 44 erkennbar, die in dem Bauraum zwischen dem Statorsockel 38 und dem Rotor 37 angeordnet ist. Die Platine 44 ist parallel zu dem Statorsockel 38 angeordnet. Die Platine 44 ist in einer zu dem Statorsockel 38 parallelen zweiten Ebene angeordnet, wobei die zweite Ebene von jedem Statorzahn 39 des Stators 36 durchbrochen wird.

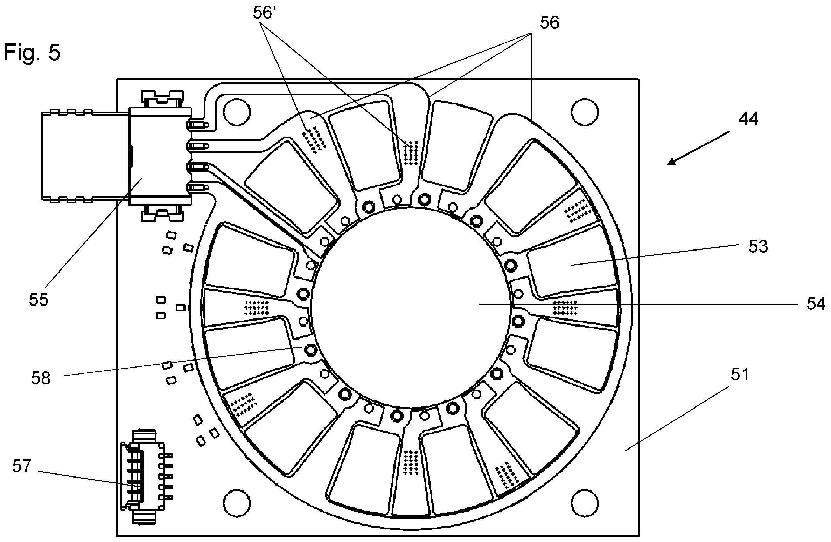

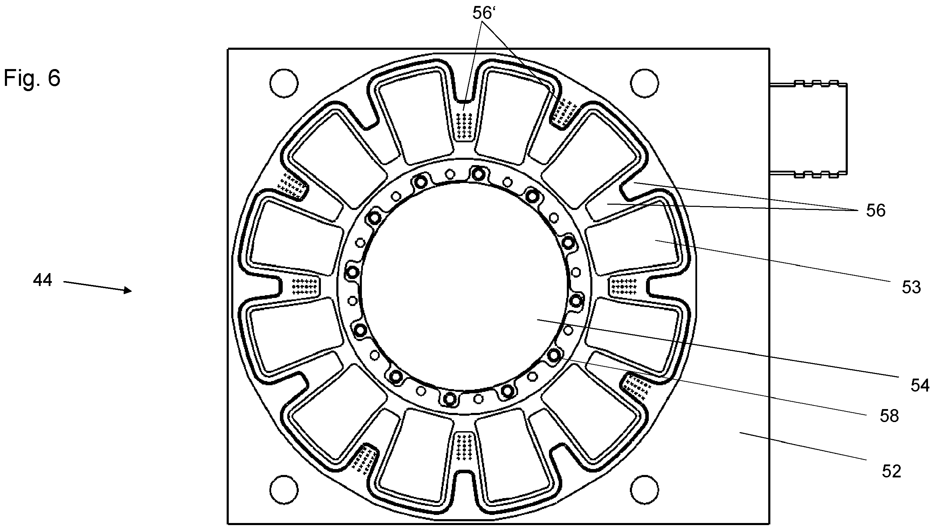

Die Platine 44 ist als Einzelheit in den Figuren 5 und 6 dargestellt. In Figur 5 ist eine Aufsicht auf eine erste Stirnfläche 51 der Platine 44 gezeigt. Die erste Stirnfläche 51 ist in den dargestellten Ausführungsbeispielen in Richtung zu dem Stator 36 orientiert. In Figur 6 ist eine Aufsicht auf eine zur ersten Stirnfläche 51 gegenüberliegenden Stirnfläche 52 gezeigt.

Die Platine 44 weist eine der Anzahl der Statorzähne 39 entsprechende Anzahl von Durchbrüchen 53 auf, welche von den Statorzähnen 39 durchgriffen werden. Die Durchbrüche 53 korrespondieren mit der Form der Statorzähne 39. Die Platine 44 weist einen Lager-Durchbruch 54 auf, welcher von dem Wälzlager 47 durchgriffen wird. Ein Element 55 einer Steuerungseinrichtung zur Steuerung der durch die Spulen 41 geleiteten Ströme ist auf der Platine 44 angeordnet. Mit dem Element 55 der Steuerungseinrichtung sind Leitungspfade 56 verbunden. Zudem sind noch ein Bus-Stecker 57 und Kontakt-Durchbrechungen 58 erkennbar. Dabei sind mehrere Leitungspfade 56 auf der ersten Stirnfläche 51 der Platine 44 kontaktiert und mehrere Leitungspfade 56 auf der zur ersten Stirnfläche 51 gegenüberliegenden Stirnfläche 52 kontaktiert. Dadurch wird der Bauraum der Platine optimal ausgenutzt. Dabei sind die beiden in der Bildebene von Figur 5 links dargestellten Leitungspfade 56 mittels Durchkontaktierungen 56' auf der gegenüberliegenden Stirnfläche 52 durchkontaktiert, wie dies ebenfalls in Figur 6 erkennbar ist.

### Bezugszeichenliste:

- 1: Antriebseinrichtung
- 2: Flügel
- 3: Übersetzungselement
- 4: Triebelement
- 5: Bordscheibe
- 6: elektrische Maschine
- 7: Lageraufnahme
- 8: Radiallager
- 9: Umlenkrolle
- 10: Laufwagen
- 11: Räder
- 12: Laufschiene
- 36: Stator
- 37: Rotor
- 38: Statorsockel
- 39: Statorzähne
- 41: Spule
- 44: Platine
- 45: Zahnmantel
- 46: Lageraufnahme
- 47: Wälzlager
- 47': Kugeln des Wälzlagers 47
- 48: Permanentmagnet
- 49: Rotorplatte
- 50: Bolzen
- 51: erste Stirnfläche
- 52: zweite Stirnfläche
- 53: Durchbrüche
- 54: Lager-Durchbruch
- 55: Element einer Steuerungseinrichtung
- 56: Leitungspfade
- 57: Bus-Stecker
- 58: Kontakt-Durchbruch

## Patentansprüche

1. Antriebseinrichtung (1) zum Verschieben eines Flügels (2), insbesondere eines Türflügels oder eines Fensterflügels, mit einer elektrischen Maschine (6), wobei die elektrische Maschine (6) einen, insbesondere einzigen, Stator (36) und einen, insbesondere einzigen, um eine Maschinenachse (X1) drehbaren Rotor (37) aufweist, mit zumindest einem Übersetzungselement (3) zur Übersetzung einer Drehbewegung des Rotors (37) in eine lineare Bewegung, **dadurch gekennzeichnet, dass** die elektrische Maschine (6) als Axialflussmaschine ausgebildet ist.

2. Antriebseinrichtung (1) nach Anspruch 1, **dadurch gekennzeichnet, dass** die Maschinenachse (X1) orthogonal zu einer von dem Flügel (2) gebildeten virtuellen Ebene verläuft.

3. Antriebseinrichtung (1) Anspruch 1 oder 2, **dadurch gekennzeichnet, dass** die Antriebseinrichtung (1) ein mit dem Rotor (37) wirkverbundenes, insbesondere drehfestes, Triebelement (4) aufweist, bevorzugt, dass der Rotor (37) und das Triebelement (4) formschlüssig und/oder kraftschlüssig und/oder stoffschlüssig verbunden sind, insbesondere einstückig ausgebildet sind.

4. Antriebseinrichtung (1) nach Anspruch 3, **dadurch gekennzeichnet, dass** das Triebelement (4) eine Außenverzahnung aufweist, bevorzugt, dass es sich bei der Außenverzahnung um eine gerade oder eine schräge oder eine V-förmige Außenverzahnung handelt.

5. Antriebseinrichtung (1) nach Anspruch 4, **dadurch gekennzeichnet, dass** das, insbesondere als Zahnriemen ausgebildete, Übersetzungselement (3) eine zu der Außenverzahnung des Triebelements (4) korrespondierende Verzahnung aufweist und um das Triebelement (4), insbesondere gespannt, derart angeordnet ist, dass die Verzahnung des Übersetzungselements (3) und die Außenverzahnung des Triebelements (4) in Eingriff stehen.

6. Antriebseinrichtung (1) nach einem der Ansprüche 3 bis 5, **dadurch gekennzeichnet, dass** das Triebelement (4) zumindest eine in radialer Richtung des Rotors (37) abstehende, insbesondere kreisförmige, Bordscheibe (5) zur Sicherung des Übersetzungselements (3) an dem Triebelement (4) aufweist.

7. Antriebseinrichtung (1) nach einem der vorhergehenden Ansprüche, **dadurch gekennzeichnet, dass** der Stator (36) einen, insbesondere plattenförmigen, Statorsockel (38), und mehreren von einer gemeinsamen Oberfläche des Statorsockels (38) in axialer Richtung der Axialflussmaschine abstehende Statorzähne (39) aufweist, bevorzugt, dass der Statorsockel (39) eine Lageraufnahme (46) zur Aufnahme eines Wälzlagers (47) oder eines Gleitlagers aufweist, besonders bevorzugt dass, der Stator (36) einen feststehenden Bolzen (50) aufweist, wobei der Bolzen (50) formschlüssig und/oder kraftschlüssig und/oder stoffschlüssig mit dem Stator (36) verbunden oder einstückig ausgebildet ist und die Lageraufnahme (46) umfasst.

8. Antriebseinrichtung (1) nach einem der vorhergehenden Ansprüche, **dadurch gekennzeichnet, dass** die Antriebseinrichtung (1) ein mit dem Rotor (37) wirkverbundenes, insbesondere drehfestes, Triebelement (4) aufweist, wobei der Stator (36) oder ein mit dem Stator (36) feststehender Bolzen (50) eine weitere Lageraufnahme (7) aufweist, wobei an der weiteren Lageraufnahme (7) ein Radiallager (8) zur drehbaren Lagerung des Triebelements (4) angeordnet ist und das Triebelement (4) an dem Radiallager (8) gelagert ist.

9. Antriebseinrichtung (1) nach Anspruch 8, **dadurch gekennzeichnet, dass** das Übersetzungselement (3), insbesondere die Wirkungslinie des Übersetzungselements (3), die axiale Erstreckung des Radiallagers (8) zumindest teilweise umgibt.

10. Antriebseinrichtung (1) nach einem der vorhergehenden Ansprüche, **dadurch gekennzeichnet, dass** der Stator (36) eine oder mehrere Spulen (41) und der Rotor (37) einen oder mehrere Permanentmagneten (49) aufweist, bevorzugt dass das Verhältnis zwischen der Anzahl der Permanentmagnete (49) als Dividend und der Anzahl der Spulen (41) in einem Bereich von 1,0 bis 1,6, bevorzugt in einem Bereich von 1,2 bis 1,4 liegt, besonders bevorzugt 4/3 ist.

11. Antriebseinrichtung (1) nach einem der vorhergehenden Ansprüche, **dadurch gekennzeichnet, dass** der Stator (36) eine oder mehrere Spulen (41) und einen, insbesondere plattenförmigen, Statorsockel (38) aufweist, wobei in einem Bauraum zwischen dem Statorsockel (38) und dem Rotor (37) eine Platine (44) angeordnet ist, wobei zumindest eine, insbesondere jede, der Spulen (41), mit der Platine (44) elektrisch verbunden ist, bevorzugt, dass die Platine (44) parallel zu dem Statorsockel (38) angeordnet ist.

12. Antriebseinrichtung (1) nach Anspruch 11, **dadurch gekennzeichnet, dass** die Spulen (41) in mehrere Leitungspfade (56), insbesondere in zwei oder drei Leitungspfade (56), unterteilt sind, sodass zumindest einer der Leitungspfade (56) unabhängig von zumindest einem weiteren Leitungspfad (56) bestrombar ist, bevorzugt, dass zumindest einer, insbesondere zwei, der Leitungspfade (56) auf einer ersten Stirnfläche (51) der Platine (44) angeordnet und/oder elektrisch kontaktiert ist, besonders bevorzugt, dass auf einer der ersten Stirnfläche (51) gegenüberliegenden zweiten Stirnfläche (52) der Platine (44) ebenfalls zumindest einer der Leitungspfade (56) angeordnet und/oder elektrisch kontaktiert ist.

13. Verfahren zum Verschieben eines Flügels (2), insbesondere eines Türflügels oder eines Fensterflügels, mittels einer Antriebskraft, wobei die Antriebskraft von einer Antriebseinrichtung (1) nach einem der vorherigen Ansprüche erzeugt wird, **dadurch gekennzeichnet, dass** die Antriebseinrichtung (1) mittels eines Bedienelements der Antriebseinrichtung und/oder mittels einer auf den Flügel (2) manuell durch eine Person ausgeübten Kraft aktivierbar ist, bevorzugt, dass die Antriebskraft von einer Steuerungseinrichtung der Antriebseinrichtung (1) gesteuert und/oder geregelt wird.

14. Verfahren nach Anspruch 13, **dadurch gekennzeichnet, dass** die Antriebseinrichtung (1) während einer Verschiebung des Flügels (2) deaktiviert wird, wenn
- das Bedienelement der Antriebseinrichtung (1) nicht mehr betätigt wird und/oder
- eine der Antriebskraft entgegengerichtete Kraft mittels der Steuerungseinrichtung detektiert wird.

15. Verwendung einer Antriebseinrichtung (1) nach einem der Ansprüche 1 bis 12 in einem Schieberflügelantrieb, insbesondere Schiebertürantrieb.
